# EUROPEAN PATENT SPECIFICATION

(11) **EP 3 730 812 B1**
(45) Date of publication and mention of the grant of the patent: **06.04.2022**
(21) Application number: 19752011.7
(22) Date of filing: 08.01.2019
(51) Int. Cl.: F16H 9/12, B29C 33/12, B29C 45/26

(54) **WEIGHT ROLLER, METHOD OF MANUFACTURING SAME, AND MOLD FOR USE IN MANUFACTURING WEIGHT ROLLER**
GEWICHTSWALZE, VERFAHREN ZU IHRER HERSTELLUNG UND GUSSSFORM ZUR VERWENDUNG BEI DER HERSTELLUNG EINER GEWICHTSWALZE
ROULEAU-POIDS, SON PROCÉDÉ DE FABRICATION, ET MOULE DESTINÉ À ÊTRE UTILISÉ DANS LA FABRICATION D'UN ROULEAU-POIDS

(30) Priority: 07.02.2018 JP 2018020395
(43) Date of publication of application: 28.10.2020
(73) Proprietor: Bando Chemical Industries, Ltd., Kobe-shi, Hyogo 650-0047 (JP); HONDA MOTOR CO., LTD., Minato-ku Tokyo 107-8556 (JP)
(72) Inventor: SHIRAKI, Hayato, Kobe-shi, Hyogo 650-0047 (JP); ASUMI, Michio, Wako-shi, Saitama 351-0193 (JP); KOMURO, Hirokazu, Wako-shi, Saitama 351-0193 (JP)
(74) Representative: Germain Maureau
(86) International application number: PCT/JP2019/000226
(87) International publication number: WO 2019/155804

(56) References cited:
- WO-A1-2010/074032
- WO-A1-2015/186287
- JP-A- H07 167 237
- JP-A- 2003 305 750
- JP-A- 2008 000 995
- JP-A- 2014 083 686

## Description

### TECHNICAL FIELD

The present disclosure relates to a weight roller, a method of manufacturing a weight roller, and a mold for use in manufacturing a weight roller.

### BACKGROUND ART

Some types of motorcycles include a stepless transmission that automatically changes speed in accordance with the number of revolutions of the engine. The stepless transmission includes a pulley including a fixed plate and a movable plate, a V-belt wound around the pulley, a guide plate disposed at the back of the movable plate and fastened to a rotary shaft, and cylindrical weight rollers disposed in a gap between the guide plate and the movable plate and configured to move in the radial direction of the pulley.

Some types of weight rollers include a cylindrical weight adjusting member and a covering member covering, for example, the outer peripheral surface of the weight adjusting member. The covering member is made of, for example, a resin composition.

Patent Document 1 discloses such a weight roller and a method of manufacturing the weight roller with a mold.

### CITATION LIST

### PATENT DOCUMENT

Patent Document 1: Japanese Unexamined Patent Publication No. S61-163821 Another example of the prior art is in document WO2015/186287.

### SUMMARY OF THE INVENTION

### TECHNICAL PROBLEM

Weight rollers are manufactured such that, for example, a weight adjusting member is placed in a mold and a resin composition is injected into a cavity formed around the weight adjusting member to form a covering member. In this process, resin composition burrs may be formed on the covering member. If a burr is formed, the burr becomes a protruding portion raised in the up-down direction (in a direction orthogonal to the bottom surface and the upper surface of the cylindrical shape) or in the circumferential direction. The protruding portion increases the dimension in these directions, and this increase may deteriorate the performance of the weight rollers. It is possible to remove the burr formed on the covering member, but this requires additional processes, thereby increasing the manufacturing processes and manufacturing costs.

In view of the foregoing, the following describes a technique of implementing a weight roller that can reduce performance deterioration due to formation of burrs, a method of manufacturing the same, and a mold for use in manufacturing the weight roller.

### SOLUTION TO THE PROBLEM

A weight roller according to the present invention is defined in independent claim 1.

A mold according to the present invention is defined in claim 4.

A method of manufacturing a weight roller according to the present invention is defined in claim 6.

### ADVANTAGES OF THE INVENTION

The technique according to the present invention can prevent formation of burrs on the endmost surface of the upper surface and the bottom surface of the covering member of the weight roller and can prevent an increase in dimension due to the formation of burrs and can prevent resulting deterioration of performance.

### BRIEF DESCRIPTION OF THE DRAWINGS

[FIG. 1] FIG. 1 is a diagram illustrating an example weight roller according to a first unclaimed embodiment.
[FIG. 2] FIG. 2 is an enlarged sectional view of a peripheral portion close to an upper surface of the weight roller illustrated in FIG. 1.
[FIG. 3] FIG. 3 is a diagram illustrating a method of manufacturing the weight roller illustrated in FIG. 1.
[FIG. 4] FIG. 4 is an enlarged view of circle A illustrated in FIG. 3.
[FIG. 5] FIG. 5 is a diagram illustrating an example weight roller according to the present invention.
[FIG. 6] FIG. 6 is an enlarged sectional view of a peripheral portion close to an upper surface of the weight roller illustrated in FIG. 5.
[FIG. 7] FIG. 7 is a diagram illustrating a method of manufacturing the weight roller illustrated in FIG. 5.
[FIG. 8] FIG. 8 is an enlarged view of circle B illustrated in FIG. 7.
[FIG. 9] FIG. 9 is a diagram corresponding to the diagram illustrated in FIG. 8 without including an inner-chamfer forming portion.
[FIG. 10] FIG. 10 is a diagram illustrating formation of a burr when a weight roller is manufactured as illustrated in FIG. 9.
[FIG. 11] FIG. 11 is a diagram illustrating an inner-chamfer forming portion having an arc section.
[FIG. 12] FIG. 12 is a diagram illustrating a weight roller according to a modification of the present disclosure.
[FIG. 13] FIG. 13 is a diagram illustrating a method of manufacturing the weight roller illustrated in FIG. 12.

### DESCRIPTION OF EMBODIMENT

Embodiments of the present invention will be described below with reference to the drawings.

### <First Embodiment

### (Configuration of Weight Roller)

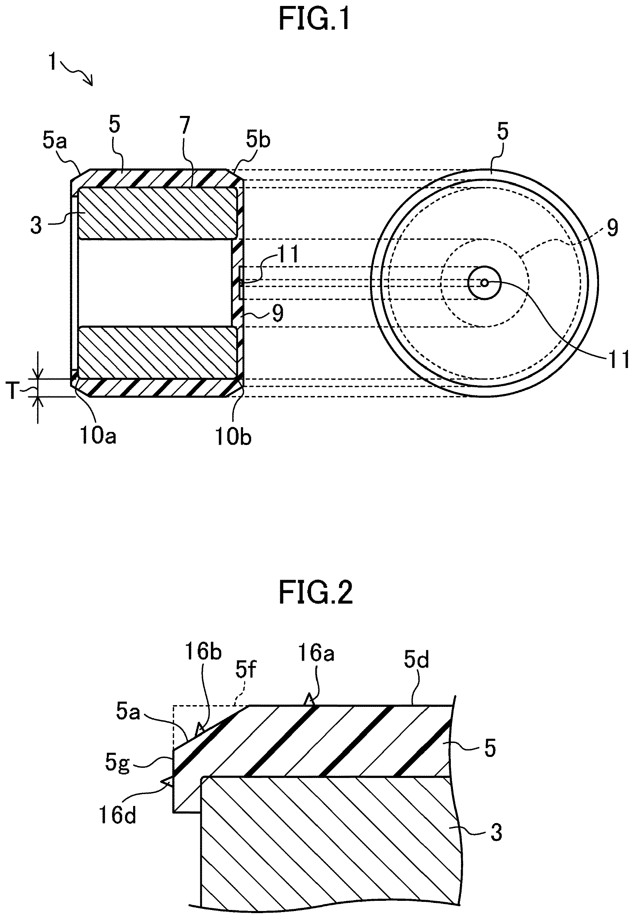

FIG. 1 is a diagram illustrating an example weight roller 1 according to a first embodiment. FIG. 1 illustrates, at the left side, a sectional view taken in parallel with the axis of the weight roller 1 and illustrates, at the right side, a plan view of the weight roller 1 seen from its bottom surface. In the present description, for ease of description, an end surface of the cylindrical weight roller 1 having a gate mark (to be described later) may be referred to as a bottom or a lower side, and the opposite surface may be referred to as an upper side.

As illustrated in FIG. 1, the weight roller 1 according to the first embodiment includes a cylindrical weight adjusting member 3 and a covering member 5 made of a resin composition and disposed on an outer peripheral surface 7 of the weight adjusting member 3. The weight roller 1 generally has a cylindrical shape. The covering member 5 may cover not only the outer peripheral surface 7 of the weight adjusting member 3, but also the bottom surface and at least part of the upper surface of the weight adjusting member 3 so that, for example, the weight adjusting member 3 will not fall off the covering member 5. The covering member 5 has a blind cylindrical shape and may have a circular disk gate mark 11 at the center of the bottom when seen in the plan view.

The covering member 5 is formed by insert molding using a disk gate. The covering member 5 is in contact with the region of the weight adjusting member 3 extending from part of the upper surface to the outer peripheral surface 7 and part of the lower surface. The thickness of the covering member 5 covering the outer peripheral surface of the weight adjusting member 3 is substantially uniform except at the upper and lower ends. The thickness may be, for example, about 1.5 mm or more and 2.5 mm or less. If the thickness of the covering member 5 is too small, the covering member 5 may be broken or cracked due to thermal shock. If the thickness is too large, the manufacturing costs may increase.

The covering member 5 has portions protruding beyond the upper surface and the lower surface of the weight adjusting member 3. The portions protrude to the upper side and to the lower side (corresponding to the left side and the right side, respectively, in the diagram at the left side in FIG. 1) relative to the weight adjusting member 3. At the lower side, the covering member 5 covers the lower surface of the weight adjusting member 3, and this lower portion protrudes to the lower side relative to the weight adjusting member 3. At the upper side, the covering member 5 covers part of the periphery of the upper surface of the weight adjusting member 3, and this upper portion protrudes to the upper side relative to the weight adjusting member 3.

FIG. 2 is an enlarged view of a peripheral portion close to the upper surface of the weight roller 1. As illustrated in FIG. 2, the covering member 5 has an outer chamfered portion 5a having a chamfered shape along the outer periphery of the upper surface. In the same manner, the covering member 5 has an outer chamfered portion 5b having a chamfered shape along the outer periphery of the lower surface. The reference characters 16a, 16b, and 16d will be described later.

The weight roller 1 may have an outer diameter of about 15 mm to 30 mm and have a height of about 12 mm to 20 mm, for example. Specifically, the weight roller 1 has, for example, an outer diameter of 20 mm and a height of 15 mm.

### (Material of Weight Roller)

In one preferred embodiment, the covering member 5 is made of a self-lubricating resin composition. A "self-lubricating" material is a material having a small coefficient of friction. Using a self-lubricating resin composition can reduce the amount to be worn when the weight roller 1 slides relative to a metal member.

The covering member 5 is made of, for example, polyamide as a base resin, and includes fibers and lubricant.

### (Method of Manufacturing Weight Roller)

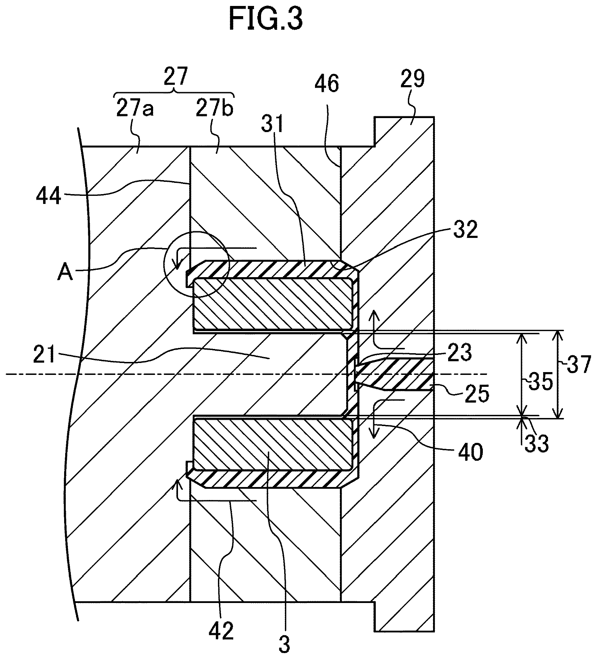

FIG. 3 is a sectional view illustrating an example method of manufacturing the weight roller 1 illustrated in FIG. 1. The weight roller 1 according to the first embodiment is manufactured by insert molding.

To manufacture the weight roller 1 according to the first embodiment, first, a cylindrical weight adjusting member 3 made of metal is formed in a separate process by a known molding method using a mold, for example. The weight adjusting member 3 has a hole concentric with the external shape. In another process, polyamide resin (resin 31) doped with a predetermined content of predetermined additives (e.g., inorganic fibers, organic fibers, and lubricant) as described above is kneaded such that the fibers and lubricant are uniformly mixed. The weight adjusting member 3 is formed into a desired shape by forging in a mold or by machining.

Subsequently, the weight adjusting member 3 is placed in a cylindrical cavity 32 that is defined by a first mold 27 having a recessed portion and a columnar core pin 21 disposed at the center of the recessed portion. The cavity 32 is closed by a second mold 29 having a runner 25. A disk gate 23 is provided at the center of the recessed portion. In FIG. 3, a reference character 37 indicates the inner diameter of the weight adjusting member 3; a reference character 35 indicates the diameter of the core pin 21; and a reference character 33 indicates a difference (i.e., clearance) between the inner diameter 37 of the weight adjusting member 3 and the diameter 35 of the core pin 21.

The resin 31 in a molten state is then injected into the cavity 32 through the runner 25 and the disk gate 23. After the molds are cooled and the resin 31 is solidified, the molds are opened and the molded weight roller 1 is taken out. The temperature of the first mold 27 and the second mold 29 in injecting the resin 31 is determined depending on the base resin. When, for example, nylon 66 or nylon 46 is used as a base resin, the mold temperature is set to about 80°C to 90°C. The surface close to the runner 25 corresponds to the lower surface of the weight roller 1.

In the method described above, the resin 31 is injected from the disk gate 23 disposed at the center of a cavity end surface, and the weight adjusting member 3 is thus centered by a flow 40 of the resin 31 traveling from the center of the cavity end surface toward the periphery. This configuration provides less positional variation of the clearance 33 and thus can reduce misalignment between the center axis of the weight adjusting member 3 and the center axis of the core pin 21.

When the resin 31 reaches the periphery of the lower surface of the cavity 32, the resin 31 then travels from the lower surface toward the upper surface as indicated by a flow 42 of the resin 31.

Since the resin 31 contains various additives, the resin 31 is likely to generate gas. In this regard, the mold includes a gas vent structure for releasing the gas. Specifically, the first mold 27 has a two-part structure including a first portion 27a and a second portion 27b separated by a first split portion 44 extending in parallel with the upper surface and the lower surface of the weight adjusting member 3. The first split portion 44 is disposed at an outer-chamfer forming portion designed to form the outer chamfered portion 5a of the weight roller 1 to be manufactured. Disposing the first split portion 44 at a position close to the flow end of the resin 31 and using the first split portion 44 as a gas vent can release the gas generated during the formation of the covering member 5 with the resin 31.

To facilitate the release of gas from the first split portion 44, the first split portion 44 has a certain gap. Depending on the state of the gap, a burr may be formed. In particular, when weight rollers 1 are manufactured for a long period of time, the molds may deteriorate and the gap of the first split portion 44 may become greater. In this regard, formation of burr may occur more often.

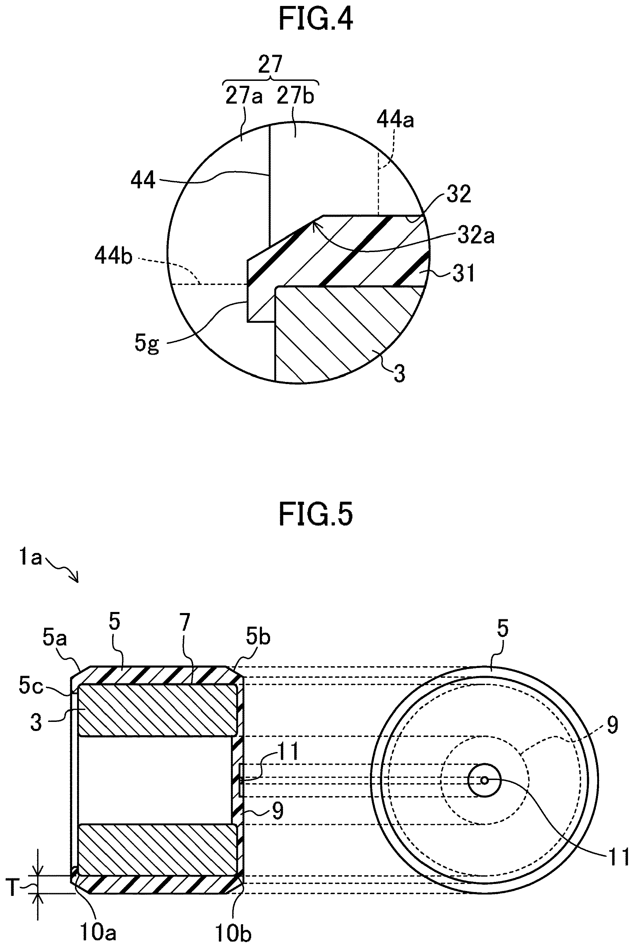

To illustrate the disposition of the first split portion 44, FIG. 4 illustrates an enlarged diagram of circle A illustrated in FIG. 3.

Suppose that, as illustrated in FIG. 2, the weight roller 1 has a burr 16a on an outermost peripheral surface 5d of the covering member 5. In this case, the external dimension of the weight roller 1 in the radial direction increases by the amount of the burr 16a, and this increase affects the performance of the weight roller 1. In manufacturing the weight roller 1, the burr 16a is formed when the split portion is disposed at a position corresponding to the outermost peripheral surface 5d of the covering member 5 as indicated by a dashed line 44a in FIG. 4.

Suppose that, as illustrated in FIG. 2, the weight roller 1 has a burr 16d on an upper end surface 5g of the covering member 5. In this case, the height dimension of the weight roller 1 increases by the amount of the burr 16d, and this increase also affects the performance of the weight roller 1. In manufacturing the weight roller 1, the burr 16d is formed when the split portion is disposed at a position corresponding to the upper end surface 5g of the covering member 5 as indicated by a dashed line 44b in FIG. 4.

In the first embodiment, as illustrated in FIG. 4, the first split portion 44 is disposed at a position corresponding to the outer chamfered portion 5a (i.e., at an outer-chamfer forming portion 32a), not corresponding to the outermost peripheral surface 5d or the upper end surface 5g. If a burr is formed, the burr, such as the burr 16b in FIG. 2, is formed on the outer chamfered portion 5a. In this case, unless the burr 16b reaches an extension 5f of the outermost peripheral surface 5d of the covering member 5, the burr 16b has no effect on the external dimension of the weight roller 1 in the radial direction. The burr 16b has no effect on the height dimension of the weight roller 1. In this regard, the burr 16b, if any, has no effect on the performance of the weight roller 1.

As described above, disposing the first split portion 44, which may form a burr, at a position of the mold not corresponding to the outermost peripheral surface 5d but corresponding to the outer chamfered portion 5a can prevent performance deterioration of the weight roller 1 even if a burr is formed. If a burr is formed by the first split portion 44, there is no need for a process of removing the burr or the accompanying costs.

If no burr 16b is formed on the outer chamfered portion 5a of the weight roller 1, a parting line corresponding to the first split portion 44 is typically formed. The parting line can indicate that the first split portion 44 is disposed at the position corresponding to the outer chamfered portion 5a.

The first mold 27 and the second mold 29 are separated by a second split portion 46, and a burr may be formed by the second split portion 46. The second split portion 46 is not disposed at a position corresponding to the lower endmost surface. If a burr is formed at this position, the burr has no effect on the height dimension of the weight roller 1. In the first embodiment, variation in the height dimension of the weight roller 1 due to formation of the burr is substantially prevented.

If a burr is formed at the position of the second split portion 46, the burr affects the external dimension of the weight roller 1 in the radial direction. However, as described above, since the burr formed by the first split portion 44 has no effect on the dimension in the radial direction, the likelihood of burr formation that affects the dimension of the weight roller 1 according to the first embodiment in the radial direction is reduced.

### Invention:

FIG. 5 is a diagram illustrating an example weight roller 1a according to the invention. Z

Similarly to FIG. 1, FIG. 5 illustrates, at the left side, a sectional view taken in parallel with the axis of the weight roller 1a and illustrates, at the right side, a plan view seen from the bottom surface of the weight roller 1a.

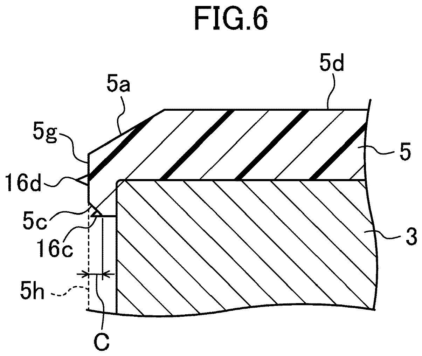

FIG. 6 is an enlarged view of a peripheral portion close to the upper surface of the weight roller 1a.

The weight roller 1a differs from the weight roller 1 according to the first embodiment in that the weight roller 1a has an inner chamfered portion 5c having a chamfered shape along the inner periphery of the upper protruding portion of the covering member 5. The inner chamfered portion 5c has a chamfered step C (FIG. 6) of, for example, 0.1 mm or more in the height direction.

The other configurations of the weight roller 1a are the same as those of the weight roller 1 according to the first embodiment. Reference characters 16c and 16d will be described later.

The material of the weight roller 1a is the same as the material of the weight roller 1 according to the first embodiment.

Furthermore, the method of manufacturing the weight roller 1a is the same as the method of manufacturing the weight roller 1 according to the first embodiment. However, a cavity 32 of the mold has a shape for forming the inner chamfered portion 5c, and the separating structure and the disposition of the split portion are different from those of the weight roller 1.

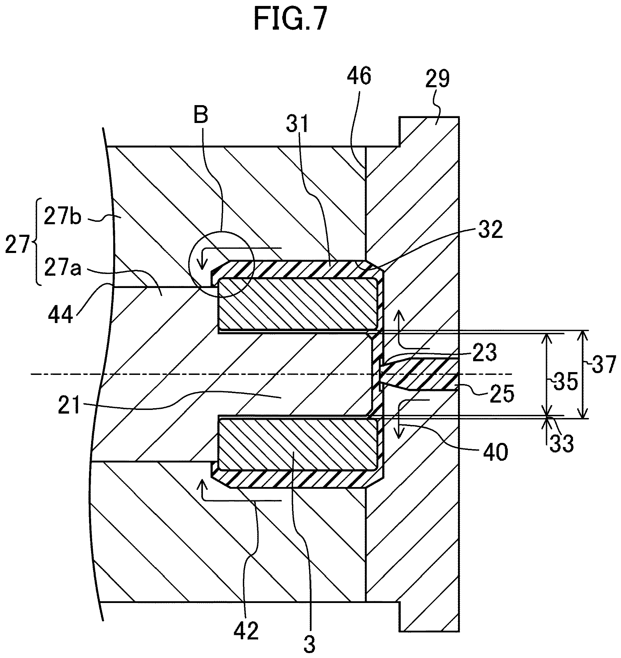

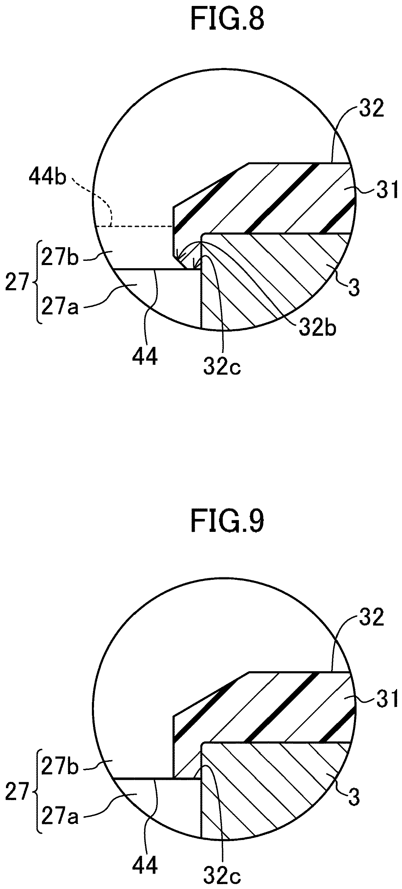

These differences are described with reference to FIG. 7 that is a sectional view illustrating a method of manufacturing the weight roller 1a. FIG. 8 illustrates an enlarged diagram of circle B illustrated in FIG. 7.

In the invention as illustrated in FIG. 7, the first mold 27 includes a first portion 27a and a second portion 27b separated by a first split portion 44 provided perpendicular to the upper surface and the lower surface of the weight adjusting member 3. As illustrated in FIG. 8, the second portion 27b of the first mold 27 has an inner-chamfer forming portion 32b corresponding to the inner chamfered portion 5c. A flow end 32c corresponding to the position where the flow 42 of the resin 31 reaches in the end is disposed on a surface facing inward of the weight roller 1a.

The first split portion 44, when seen in the sectional view taken in parallel with the upper surface of the weight adjusting member 3, has a circular shape that is concentric with the periphery of the weight adjusting member 3, and is disposed at a position corresponding to the flow end 32c.

The resin 31 is then injected to form the covering member 5 with the first split portion 44 serving as a gas vent. In this case, a burr may be formed at the position of the first split portion 44. However, as illustrated in FIG. 6, a burr 16c, if any, formed at the position of the first split portion 44 has no effect on the dimension (maximum dimension) in the up-down direction of the weight roller 1a unless the burr 16c reaches an extension 5h of the upper end surface 5g (endmost surface) of the covering member 5. The formation of the burr 16c, therefore, has no effect on the performance of the weight roller 1a.

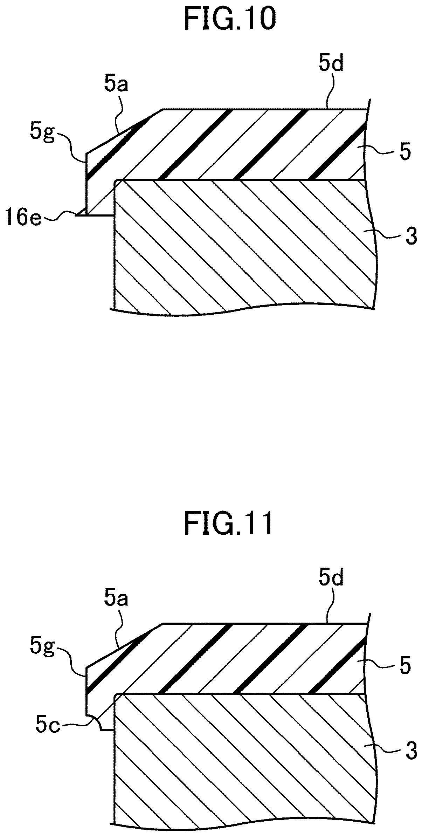

Suppose that the covering member 5 has no inner chamfered portion 5c, that is, the cavity 32 has no inner-chamfer forming portion 32b. The structure of the mold in this case is illustrated in FIG. 9 and the resulting weight roller is illustrated in FIG. 10. Suppose that the resin 31 is injected in the mold illustrated in FIG. 9 and a burr is formed by the first split portion 44. In this case, a burr 16e is formed as illustrated in FIG. 10. The burr 16e, whatever the size may be, protrudes from the upper end surface 5g of the covering member 5 and increases the height dimension of the weight roller 1a, accordingly. The burr 16e, therefore, affects the performance of the weight roller 1a.

With the inner-chamfer forming portion 32b, a burr may be formed on the upper end surface 5g, such as the burr 16d illustrated in FIG. 6, if the first split portion 44 is disposed at the position of a dashed line 44b in FIG. 8. In this case, too, the burr increases the height dimension of the weight roller 1a.To prevent this increase, the first split portion 44 is not disposed at this position. In the same manner, although not illustrated in the drawings, the split portion is not disposed at a position corresponding to the lower end surface (endmost surface) to prevent burr formation thereon.

As described above, the weight roller according to the invention has the inner chamfered portion 5c on the covering member 5, and the first split portion 44 of the first mold is disposed at a position corresponding to the inner chamfered portion 5c so that a burr, if any, will be formed on the inner chamfered portion 5c. This configuration can manufacture a weight roller having a stable size with regard to the outer diameter and the height without being affected by burrs.

If a burr is formed, the burr has no effect on the dimension of the weight roller. This configuration can increase the service life of the mold and can in turn reduce the manufacturing costs.

In the description above, the inner-chamfer forming portion 32b illustrated in, for example, FIG. 6 has a linear section. However, the shape is not limited to this. As illustrated in FIG. 11, the inner chamfer forming portion 32b may have a curved section (an arc section in this example).

In the same manner as in the first embodiment, a burr may be formed by the second split portion 46 that is a split portion between the first mold 27 and the second mold 29. However, in the same manner as the first embodiment, a burr, if any, has no effect on the height dimension of the weight roller 1, and the likelihood of burr formation that affects the dimension in the radial direction is reduced.

### <Modification>

In the first embodiment, the covering member 5 has a blind cylindrical shape, and has the circular disk gate mark 11 at the center of the bottom in the plan view (FIG. 1). As illustrated in FIGS. 3 and 7, the covering member 5 is formed such that the resin 31 is injected from the disk gate 23 disposed at the center of the end surface of the cavity 32.

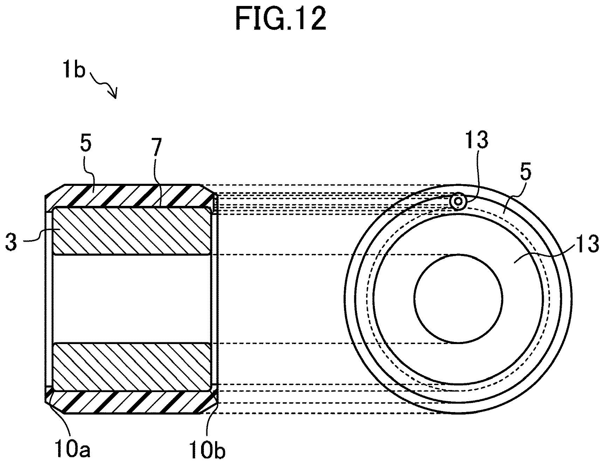

However, the covering member 5 is not limited to this. FIG. 12 is a diagram illustrating a weight roller 1b according to a modification. FIG. 12 illustrates, at the left side, a sectional view taken in parallel with the axis of the weight roller 1b, and illustrates, at the right side, a plan view seen from the bottom surface of the weight roller 1b.

As illustrated in FIG. 12, the covering member 5 of the weight roller 1b covers a region extending from the outer peripheral surface 7 to the upper and lower corners of the weight adjusting member 3. The covering member 5 does not have to cover the entire bottom surface of the weight adjusting member 3, and may cover only part of the bottom surface of the weight adjusting member 3. The covering member 5 has a gate mark 13 of a pin gate at an outer peripheral portion on the bottom.

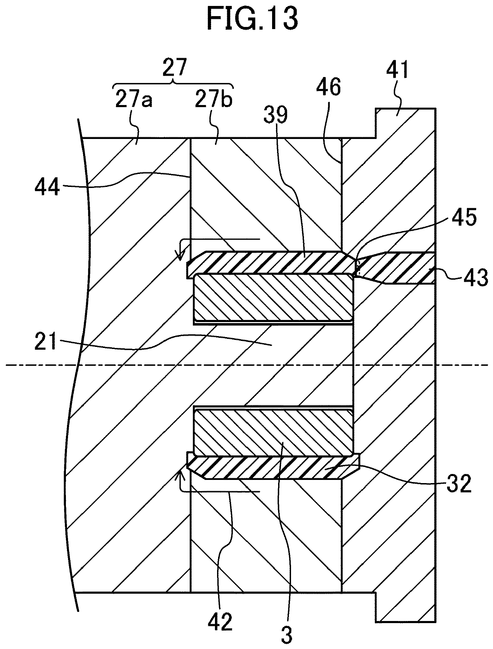

The weight roller 1b described above is manufactured by using a mold having a pin gate as illustrated in FIG. 13. In this case, the second mold 41 covering the recessed portion of the first mold 27 has a runner 43 and a pin gate 45 that are disposed at a position corresponding to a peripheral portion of the cavity end surface, and a resin 39 is injected through the pin gate 45 into the cavity. Configurations such as separating the first mold 27 into the first portion 27a and the second portion 27b and disposing the first split portion 44 of the first mold 27 at a predetermined position are the same as the configurations of the first embodiment described above.

The weight roller 1a according to the invention may be manufactured by using a mold having a pin gate in the same manner as the weight roller 1b. Configurations such as providing the inner chamfered portion 5c, how the first mold 27 is separated, and the disposition of the first split portion 44 are the same as the configurations of the second embodiment described above.

### INDUSTRIAL APPLICABILITY

The weight roller according to the present invention can be manufactured with reduced formation of a burr that may affect the performance of the weight roller, and thus can be manufactured stably. Such a weight roller is advantageous.

### DESCRIPTION OF REFERENCE CHARACTERS

- 1: Weight roller
- 1a: Weight roller
- 1b: Weight roller
- 3: Weight adjusting member
- 5: Covering member
- 5a: Outer chamfered portion
- 5b: Outer chamfered portion
- 5c: Inner chamfered portion
- 5d: Outermost peripheral surface
- 5f: Extension
- 5g: Upper end surface
- 5h: Extension
- 7: Outer peripheral surface
- 11: Disk gate mark
- 13: Gate mark
- 16a: Burr
- 16b: Burr
- 16c: Burr
- 16d: Burr
- 16e: Burr
- 21: Core pin
- 23: Disk gate
- 25: Runner
- 27: First mold
- 27a: First portion
- 27b: Second portion
- 29: Second mold
- 31: Resin
- 32: Cavity
- 32a: Outer-chamfer forming portion
- 32b: Inner-chamfer forming portion
- 32c: Flow end
- 33: Clearance
- 35: Diameter
- 37: Inner diameter
- 39: Resin
- 41: Second mold
- 43: Runner
- 44: Split portion
- 44a: Dashed line
- 44b: Dashed line
- 45: Pin gate

## Claims

1. A weight roller (1a) comprising:
a weight adjusting member (3) having a cylindrical shape; and
a covering member (5) covering an outer peripheral surface (7) and at least part of an upper surface and a lower surface which are two **opposite** surfaces of the weight adjusting member (3), the covering member (5) protruding beyond the upper surface and the lower surface of the weight adjusting member (3), wherein
the covering member (5) is made of a resin composition, **characterized in that** the covering member (5) has a portion protruding beyond the upper surface of the weight adjusting member (3), the portion having an inner chamfered portion (5c) having a chamfered shape along an inner periphery of the portion, and
the covering member (5) is formed by a mold (27, 29) having at least one split portion (44) disposed at a position corresponding to the inner chamfered portion (5c).

2. The weight roller of claim 1, wherein
the covering member (5) has an outer chamfered portion (5a) having a chamfered shape along an outer periphery of the upper surface of the covering member (5), and
the covering member (5) is formed by a mold (27) having at least one split portion (44) disposed at a position corresponding to the outer chamfered portion (5a).

3. The weight roller of any one of claims 1 to 2, wherein
the covering member (5) is made of a self-lubricating resin composition.

4. A mold comprising a set of molds (27, 29) for use in manufacturing a weight roller according to any of claims 1 to 3, wherein
the set of molds (27, 29) has at least one split portion (44) and defines a cavity (32) formed when the set of molds (27, 29) are closed with the weight adjusting member (3) being accommodated in the cavity (32) to form the covering member (5),
the set of molds (27, 29) has an inner-chamfer forming portion (32b) configured to form a chamfered shape along an inner periphery of a portion of the covering member (5) protruding beyond the upper surface of the weight adjusting member (3), and
the split portion (44) is disposed at a position corresponding to the inner chamfered portion (5c).

5. The mold of claim 4, further comprising:
an outer-chamfer forming portion (32a) configured to form a chamfered shape along an outer periphery of the upper surface of the covering member (5), wherein
the split portion (44) includes a split portion disposed at the outer-chamfer forming portion (32a).

6. A method of manufacturing a weight roller according to any of claims 1 to 3, the method comprising:
placing the weight adjusting member (3) having a cylindrical shape in the cavity (32) of a mold according to any of claims 4 to 5; and
forming the covering member (5) by injecting a resin composition from a gate (23) into the cavity (32).

## Patentansprüche

1. Gewichtswalze (1a), umfassend:
ein Gewichtsanpassungselement (3) mit einer zylindrischen Form; und
ein Abdeckelement (5), das eine äußere Umfangsfläche (7) und mindestens einen Teil einer oberen Fläche und einer unteren Fläche, die zwei gegenüberliegende Flächen des Gewichtsanpassungselements (3) sind, abdeckt, wobei das Abdeckelement (5) über die obere Fläche und die untere Fläche des Gewichtsanpassungselements (3) herausragt, wobei
das Abdeckelement (5) aus einer Harzzusammensetzung besteht, **dadurch gekennzeichnet, dass** das Abdeckelement (5) einen Abschnitt aufweist, der über die obere Fläche des Gewichtsanpassungselements (3) herausragt, der Abschnitt einen inneren abgeschrägten Abschnitt (5c) mit einer abgeschrägten Form entlang eines Innenumfangs des Abschnitts aufweist, und
das Abdeckelement (5) mit einer Gussform (27, 29) gebildet wird, die mindestens einen geteilten Abschnitt (44) aufweist, der an einer dem inneren abgeschrägten Abschnitt (5c) entsprechenden Position angeordnet ist.

2. Gewichtswalze nach Anspruch 1, wobei
das Abdeckelement (5) einen äußeren abgeschrägten Abschnitt (5a) mit einer abgeschrägten Form entlang eines Außenumfangs der oberen Fläche des Abdeckelements (5) aufweist, und
das Abdeckelement (5) mit einer Gussform (27) gebildet wird, die mindestens einen geteilten Abschnitt (44) aufweist, der an einer dem äußeren abgeschrägten Abschnitt (5a) entsprechenden Position angeordnet ist.

3. Gewichtswalze nach einem der Ansprüche 1 bis 2, wobei
das Abdeckelement (5) aus einer selbstschmierenden Harzzusammensetzung besteht.

4. Gussform, die einen Satz an Gussformen (27, 29) zur Verwendung bei der Herstellung einer Gewichtswalze nach einem der Ansprüche 1 bis 3 umfasst, wobei
der Satz an Gussformen (27, 29) mindestens einen geteilten Abschnitt (44) aufweist und einen Hohlraum (32) definiert, der gebildet wird, wenn der Satz an Gussformen (27, 29) mit dem Gewichtsanpassungselement (3), das in dem Hohlraum (32) untergebracht ist, geschlossen wird, um das Abdeckelement (5) zu bilden,
der Satz an Gussformen (27, 29) einen eine Abschrägung an der Innenseite bildenden Abschnitt (32b) aufweist, der konfiguriert ist, um eine abgeschrägte Form entlang eines Innenumfangs eines Abschnitts des Abdeckelements (5), der über die obere Fläche des Gewichtsanpassungselements (3) herausragt, zu bilden, und
der geteilte Abschnitt (44) an einer dem inneren abgeschrägten Abschnitt (5c) entsprechenden Position angeordnet ist.

5. Gussform nach Anspruch 4, ferner umfassend:
einen eine Abschrägung an der Außenseite bildenden Abschnitt (32a), der konfiguriert ist, um eine abgeschrägte Form entlang eines Außenumfangs der oberen Fläche des Abdeckelements (5) zu bilden, wobei
der geteilte Abschnitt (44) einen an dem eine Abschrägung an der Außenseite bildenden Abschnitt (32a) angeordneten geteilten Abschnitt enthält.

6. Verfahren zur Herstellung einer Gewichtswalze nach einem der Ansprüche 1 bis 3, wobei das Verfahren Folgendes umfasst:
Platzieren des Gewichtsanpassungselements (3) mit einer zylindrischen Form in dem Hohlraum (32) einer Gussform nach einem der Ansprüche 4 bis 5; und
Bilden des Abdeckelements (5) durch Einspritzen einer Harzzusammensetzung von einer Öffnung (23) in den Hohlraum (32).

## Revendications

1. Rouleau contrepoids (1a) comprenant :
un élément de réglage de poids (3) ayant une forme cylindrique ; et
un élément de couverture (5) couvrant une surface périphérique externe (7) et au moins une partie d'une surface supérieure et d'une surface inférieure qui sont deux surfaces opposées de l'élément de réglage de poids (3), l'élément de couverture (5) faisant saillie au-delà de la surface supérieure et de la surface inférieure de l'élément de réglage de poids (3), dans lequel
l'élément de couverture (5) est réalisé en une composition de résine,
**caractérisé en ce que** l'élément de couverture (5) a une partie faisant saillie au-delà de la surface supérieure de l'élément de réglage de poids (3), la partie ayant une partie chanfreinée interne (5c) ayant une forme chanfreinée le long d'une périphérie interne de la partie, et
l'élément de couverture (5) est formé par un moule (27, 29) ayant au moins une partie fendue (44) disposée à une position correspondant à la partie chanfreinée interne (5c).

2. Rouleau contre-poids de la revendication 1, dans lequel
l'élément de couverture (5) a une partie chanfreinée externe (5a) ayant une forme chanfreinée le long d'une périphérie externe de la surface supérieure de l'élément de couverture (5), et
l'élément de couverture (5) est formé par un moule (27) ayant au moins une partie fendue (44) disposée à une position correspondant à la partie chanfreinée externe (5a).

3. Rouleau contre-poids de l'une quelconque des revendications 1 et 2, dans lequel
l'élément de couverture (5) est réalisé en une composition de résine autolubrifiante.

4. Moule comprenant un ensemble de moules (27, 29) pour une utilisation dans la fabrication d'un rouleau contre-poids selon l'une des revendications 1 à 3, dans lequel
l'ensemble de moules (27, 29) a au moins une partie fendue (44) et définit une cavité (32) formée lorsque l'ensemble de moules (27, 29) est fermé, l'élément de réglage de poids (3) étant logé dans la cavité (32) pour former l'élément de couverture (5),
l'ensemble de moules (27, 29) a une partie de formation de chanfrein interne (32b) configurée pour former une forme chanfreinée le long d'une périphérie interne d'une partie de l'élément de couverture (5) faisant saillie au-delà de la surface supérieure de l'élément de réglage de poids (3), et
la partie fendue (44) est disposée à une position correspondant à la partie chanfreinée interne (5c).

5. Moule de la revendication 4, comprenant en outre :
une partie de formation de chanfrein externe (32a) configurée pour former une forme chanfreinée le long d'une périphérie externe de la surface supérieure de l'élément de couverture (5), dans lequel
la partie fendue (44) comprend une partie fendue disposée au niveau de la partie de formation de chanfrein externe (32a).

6. Procédé de fabrication d'un rouleau contre-poids selon l'une des revendications 1 à 3, le procédé comprenant :
le placement de l'élément de réglage de poids (3) ayant une forme cylindrique dans la cavité (32) d'un moule selon l'une des revendications 4 et 5 ; et
la formation de l'élément de couverture (5) en injectant une composition de résine depuis une entrée (23) dans la cavité (32).
